# FASCICULE DE BREVET EUROPEEN

(11) **EP 4 674 734 B1**
(45) Date de publication et mention de la délivrance du brevet: **15.07.2026**
(21) Numéro de dépôt: 25182572.5
(22) Date de dépôt: 13.06.2025
(51) Int. Cl.: B62H 5/08, B60R 25/04, B62M 6/50, B62M 6/55

(54) **SYSTÈME ET PROCÉDÉ DE CONTRÔLE D'UNE ASSISTANCE ÉLECTRIQUE AU PÉDALAGE D'UN VÉHICULE À PÉDALES**
SYSTEM UND VERFAHREN ZUR STEUERUNG EINER PEDALGETRIEBENEN ELEKTRISCHEN UNTERSTÜTZUNG EINES PEDALGETRIEBENEN FAHRZEUGS
SYSTEM AND METHOD FOR CONTROLLING ELECTRICAL PEDALING ASSISTANCE OF A PEDAL-DRIVEN VEHICLE

(30) Priorité: 02.07.2024 FR 2407184
(43) Date de publication de la demande: 07.01.2026
(73) Titulaire: Vel'Co, 44300 Nantes (FR)
(72) Inventeur: Regnier, Pierre, 44800 saint herblain (FR); Smith, Johnny, 44300 Nantes (FR)
(74) Mandataire: Lequien, Philippe

(56) Documents cités:
- US-A- 5 945 794
- US-A1- 2012 146 429
- US-A1- 2021 347 425

## Description

### Domaine Technique

Le domaine de l'invention est celui de la conception et de la fabrication d'un système et d'un procédé de contrôle d'une assistance électrique au pédalage d'un véhicule à pédales.

L'invention concerne plus particulièrement un système et un procédé conçus pour entraîner la bascule du moteur électrique d'assistance électrique au pédalage entre un état opérationnel et un état hors service.

### État de la technique

Dans le domaine de l'invention, et plus spécifiquement des véhicules à pédales électriques connectés, il est connu des systèmes de contrôle mettant en oeuvre un boîtier électronique associé à demeure au véhicule à pédales électrique pour collecter des informations à propos du véhicule à pédales, contrôler des composants du véhicule à pédales, voire de proposer d'autres services, tels que par exemple pour permettre la géolocalisation du véhicule à pédales et l'émission d'un signal sonore en cas de suspicion de vol du véhicule à pédales.

Ces boîtiers électroniques sont pourvus d'antennes permettant au boîtier de communiquer avec un serveur informatique centralisant les données du véhicule à pédales, ainsi que le compte d'un utilisateur auquel est associé le véhicule à pédales.

Un utilisateur peut basiquement accéder à son compte à l'aide de son ordiphone afin de gérer son véhicule à pédales.

Par exemple, un utilisateur peut déverrouiller son véhicule à pédales à l'aide d'une commande envoyée depuis son ordiphone, par l'intermédiaire du serveur, jusqu'au boîtier électronique lorsqu'il souhaite utiliser le véhicule à pédales, ou verrouiller son véhicule à pédales à l'aide d'une commande envoyée depuis son ordiphone, par l'intermédiaire du serveur, jusqu'au boîtier électronique, lorsqu'il vient de garer son véhicule à pédales et qu'il s'en éloigne.

L'usage a démontré qu'une telle conception n'est pas satisfaisante. En effet, elle implique notamment qu'un utilisateur soit toujours en position de son ordiphone pour contrôler son véhicule à pédales.

De plus, cette conception nécessite obligatoirement l'implication du serveur pour la retransmission des commandes. Document US2021347425A1 montre le préambule de la revendication 1.

### Problème technique

L'invention a notamment pour objectif de pallier ces inconvénients de l'art antérieur.

Plus précisément, l'invention a pour objectif de proposer un système de contrôle d'une assistance électrique d'un véhicule à pédales électrique facilitant le contrôle du véhicule à pédales par un utilisateur, par rapport aux systèmes de contrôle selon l'art antérieur.

L'invention a également pour objectif de fournir un tel système qui ne nécessite pas obligatoirement le recours au serveur lors de l'usage courant du véhicule à pédales.

### Résumé de l'invention

Ces objectifs, ainsi que d'autres qui apparaîtront par la suite, sont atteints grâce à l'invention qui a pour objet un système de contrôle d'une assistance électrique d'un véhicule à pédales comprenant :
- un véhicule à pédales comprenant un pédalier et un moteur électrique d'assistance électrique associé au pédalier, le moteur électrique présentant un état opérationnel dans lequel il est susceptible de produire une assistance électrique au pédalage, et un état hors service dans lequel l'assistance électrique au pédalage est inactive ;
- un dispositif électronique monté sur le véhicule à pédales et couplé au moteur électrique, le dispositif électronique étant paramétré pour entraîner une bascule du moteur électrique entre son état opérationnel et son état hors service, le dispositif électronique comprenant une antenne de télécommunication bidirectionnelle à courte distance ;
   caractérisé en ce qu'il comprend un badge électronique portable comprenant une antenne de télécommunication bidirectionnelle à courte distance apte à communiquer avec l'antenne de télécommunication bidirectionnelle à courte distance du dispositif électronique, le badge électronique étant paramétré pour émettre un message de présence par le biais de son antenne de télécommunication bidirectionnelle à courte distance,
   et en ce que le dispositif électronique est paramétré pour :
- rechercher périodiquement un message de présence du badge électronique par le biais de son antenne de télécommunication bidirectionnelle à courte distance ;
- établir une connexion avec le badge électronique lors de la réception d'un message de présence du badge électronique ;
- autoriser la bascule du moteur électrique de son état hors service à son état opérationnel suite à l'établissement d'une connexion avec le badge électronique ;
- entraîner une bascule du moteur électrique de son état opérationnel à son état hors service suite à une perte de connexion avec le badge électronique,
   et en ce que le badge électronique est paramétré pour émettre périodiquement le message de présence par le biais de son antenne de télécommunication bidirectionnelle à courte distance,
   et en ce qu'il comprend un ordiphone comprenant une antenne de télécommunication bidirectionnelle à courte distance apte à communiquer avec l'antenne de télécommunication bidirectionnelle à courte distance du dispositif électronique, le dispositif électronique étant paramétré pour également émettre périodiquement un message de présence par le biais de son antenne de télécommunication bidirectionnelle à courte distance,
   l'ordiphone étant paramétré pour rechercher périodiquement un message de présence du dispositif électronique, et pour établir une connexion avec le dispositif électronique lors de la réception d'un message de présence du dispositif électronique,
   et le dispositif électronique est paramétré pour :
- autoriser la bascule du moteur électrique de son état hors service à son état opérationnel suite à l'établissement d'une connexion avec l'ordiphone ;
- entraîner une bascule du moteur électrique de son état opérationnel à son état hors service suite à une perte de connexion avec l'ordiphone.

Grâce au système selon l'invention, un utilisateur peut accéder et utiliser son véhicule à pédales avec l'aide du badge électronique, sans obligatoirement avoir besoin de son ordiphone.

L'utilisateur, équipé de son badge électronique, doit simplement s'approcher de son véhicule à pédales pour que le moteur électrique soit basculé dans un état opérationnel.

Lorsqu'il s'éloigne de son véhicule à pédales, l'utilisateur provoque la bascule du moteur électrique dans son état hors service du fait de l'éloignement du badge électronique par rapport au boîtier électrique du véhicule à pédales.

Par sa fonction, le badge électronique portable peut aisément présenter une forme plus petite que celle d'un ordiphone, et peut ainsi, par exemple, être attaché continuellement aux clés de l'utilisateur.

Grâce au système qui comprend un ordiphone et au paramétrage du dispositif électronique, l'utilisateur peut également accéder à son véhicule à pédales et provoquer la bascule du moteur électrique dans son état opérationnel lorsqu'il s'approche du véhicule à pédales, avec son ordiphone sur lui, et ce sans nécessiter l'envoi d'une commande par le biais d'un serveur informatique. De manière comparable au badge électronique, lorsque l'utilisateur s'éloigne du véhicule à pédales il provoque alors la bascule du moteur électrique dans son état hors service du fait de l'éloignement de l'ordiphone par rapport au boîtier électronique du véhicule à pédales.

Selon une conception préférée, le badge électronique intègre un identifiant, et le dispositif électronique comprend une mémoire programmée avec l'identifiant du badge électronique, le dispositif électronique étant paramétré pour établir un primo-appairage avec le badge électronique lors de la réception d'un message de présence du badge électronique, et suite à la vérification de l'identifiant du badge électronique avec celui programmé dans sa mémoire.

La sécurisation de la connexion entre le badge électronique et le boîtier électronique est renforcée.

Suite au primo-appairage, le dispositif électronique et le badge électronique sont liés l'un à l'autre, et tendent à se reconnecter l'un à l'autre dès qu'ils s'approchent l'un de l'autre.

L'invention a également pour objet un procédé de contrôle d'une assistance électrique d'un véhicule à pédales, le procédé mettant en œuvre un système de contrôle d'une assistance électrique d'un véhicule à pédales comprenant :
- un véhicule à pédales comprenant un pédalier et un moteur électrique d'assistance électrique associé au pédalier, le moteur électrique présentant un état opérationnel dans lequel il est susceptible de produire une assistance électrique au pédalage, et un état hors service dans lequel l'assistance électrique au pédalage est inactive ;
- un dispositif électronique solidarisé au véhicule à pédales, le dispositif électronique étant couplé au moteur électrique et paramétré pour entraîner une bascule du moteur électrique entre son état opérationnel et son état hors service, le dispositif électronique comprenant une antenne de télécommunication bidirectionnelle à courte distance ;
   caractérisé en ce que le système comprend également un badge électronique portable comprenant une antenne de télécommunication bidirectionnelle à courte distance apte à communiquer avec l'antenne de télécommunication bidirectionnelle à courte distance du dispositif électronique,
   le procédé comprenant :
      - une étape de recherche par le dispositif électronique, dans laquelle le dispositif électronique recherche périodiquement un message de présence du badge électronique par le biais de son antenne de télécommunication bidirectionnelle à courte distance ;
      - une étape d'annonce du badge électronique, dans laquelle le badge électronique émet un message de présence par le biais de son antenne de télécommunication bidirectionnelle à courte distance ;
      - une étape de connexion entre le badge électronique et le dispositif électronique lors de la réception d'un message de présence du badge électronique par le dispositif électronique ;
      - une étape de déverrouillage, dans laquelle le dispositif électronique autorise la bascule du moteur électrique de son état hors service à son état opérationnel, entraînée par l'établissement d'une connexion du dispositif électronique avec le badge électronique;
      - une étape de verrouillage, dans laquelle le dispositif électronique entraîne une bascule du moteur électrique de son état opérationnel à son état hors service, l'étape de verrouillage étant entraînée par une perte de connexion du dispositif électronique avec le badge électronique,
   et en ce que, lors de l'étape d'annonce du badge électronique, le badge électronique émet périodiquement son message de présence,
   et en ce que le système met également en œuvre un ordiphone comprenant une antenne de télécommunication bidirectionnelle à courte distance apte à communiquer avec l'antenne de télécommunication bidirectionnelle à courte distance du dispositif électronique,
   le procédé comprenant :
      - une étape d'annonce par le dispositif électronique, dans laquelle le dispositif électronique émet périodiquement un message de présence par le biais de son antenne de télécommunication bidirectionnelle à courte distance ;
      - une étape de recherche par l'ordiphone, dans laquelle l'ordiphone recherche périodiquement un message de présence du dispositif électronique ;
         et :
         - l'étape de déverrouillage est également entraînée par l'établissement de la connexion du dispositif électronique avec l'ordiphone ;
         - l'étape de verrouillage est également entraînée par une perte de connexion du dispositif électronique avec l'ordiphone.

Ce procédé offre les mêmes avantages que le système précédemment décrit.

Avantageusement, l'étape de verrouillage n'est pas entraînée tant que l'un du badge électronique et de l'ordiphone est toujours connecté avec le dispositif électronique.

Ceci permet d'éviter que l'étape de verrouillage de se déclenche lorsque l'utilisateur se déplace avec son véhicule à pédales en emportant avec lui son badge électronique tandis que son ordiphone reste à proximité du lieu où était stationné le véhicule à pédales.

Avantageusement, le procédé comprend une étape préliminaire de primo-appairage du badge électronique avec le dispositif électronique, l'étape préliminaire de primo-appairage comprenant :
- une sous-étape de renseignement au dispositif électronique d'un identifiant du badge électronique ;
- une sous-étape de positionnement du badge électronique à une portée opérationnelle des antennes de télécommunication bidirectionnelle à courte distance du dispositif électronique et du badge électronique ;
- une sous-étape de primo-connexion du dispositif électronique au badge électronique ;
et dans lequel, suite à l'étape préliminaire de primo-appairage le dispositif électronique et le badge électronique gardent une mémoire de ce primo-appairage, et le dispositif électronique réalise l'étape de recherche lors qu'il n'est plus connecté au badge électronique.

### Brève description des dessins

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique d'un système de contrôle d'une assistance électrique d'un véhicule à pédales, selon l'invention ;
- la figure 2 est une représentation schématique du procédé de contrôle selon l'invention.

### Description détaillée

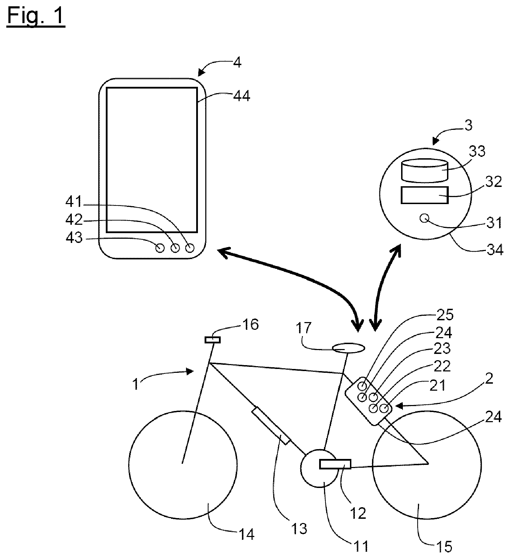

Tel que cela est visible sur la figure 1, un système de contrôle d'une assistance électrique d'un véhicule à pédales 1.

Le véhicule à pédales 1 correspond préférentiellement à une bicyclette tel que cela est illustré sur la figure 1.

Alternativement, le véhicule à pédales 1 peut correspondre à un triporteur, une rosalie.

Selon le présent mode de réalisation, le système comprend un véhicule à pédales 1, un dispositif électronique 2 monté sur le véhicule à pédales 1, un badge électronique 3 portable, et un ordiphone 4.

Selon un mode de réalisation envisageable, le système pourrait ne pas comprendre d'ordiphone 4.

Le véhicule à pédales 1 comprend :
- un pédalier 11 ;
- un moteur électrique 12 d'assistance électrique associé au pédalier 11 ;
- une batterie électrique 13 alimentant en électricité le moteur électrique 12, ainsi que d'autres composants électriques du véhicule à pédales 1 ;
- une roue avant 14 directrice ;
- une roue arrière 15 motrice, couplée au pédalier 11 ainsi qu'au moteur électrique 12 pour être entraînée en rotation ;
- un guidon 16 ;
- une selle 17.

Par l'expression associé au pédalier 11, il est entendu que le moteur électrique 12 est conçu pour fournir une assistance électrique au pédalage. Le moteur électrique 12 peut être couplé directement ou indirectement au pédalier 11. Il est envisageable par exemple que le moteur électrique 12 soit monté sur la roue arrière 15.

**Dans un autre** mode de réalisation envisageable, la roue avant 14 peut être motrice et le moteur électrique 12 serait monté sur cette roue avant, ou couplé indirectement à la roue avant 14 pour pouvoir l'entraîner en rotation.

Selon encore un autre mode de réalisation envisageable, le moteur électrique 12 est intégré à une remorque tractée par le véhicule à pédales 1, et l'assistance électrique au pédalage se traduit par un entraînement motorisé des roues de la remorque tractée, lors du pédalage de l'utilisateur du véhicule à pédales 1.

Le moteur électrique 12 présente un état opérationnel, ainsi qu'un état hors service.

Dans son état opérationnel, le moteur électrique 12 peut produire une assistance électrique au pédalage, par exemple en étant sollicité par l'utilisateur du véhicule à pédales 1 par le biais d'un pédalage et de la détection de ce pédalage par le moteur électrique 12, mais également, par exemple et de manière non limitative, par le biais d'un appui sur un commutateur positionné sur le guidon 16.

Dans son état hors service, l'assistance électrique au pédalage est inactive. Cette inactivation de l'assistance électrique au pédalage peut prendre plusieurs formes. Par exemple, le moteur électrique 12 peut simplement s'arrêter, en laissant la capacité au pédalier d'entraîner en rotation la roue motrice. Selon un autre exemple, le moteur électrique 12 peut s'arrêter en débrayant la transmission entre le pédalier et la roue motrice, le pédalier tournant alors « dans le vide » et étant dans l'incapacité d'entraîner la roue motrice. D'autres forme d'inactivation sont encore envisageables.

Le dispositif électronique 2 est monté sur le véhicule à pédales 1. Ce dispositif électronique 2 peut par exemple être intégré dans le carter du moteur, dans un volume interne du cadre, ou encore dans un accessoire monté sur le véhicule à pédales 1. Il est envisageable que le dispositif électronique 2 soit simplement attaché sur l'extérieur du véhicule à pédales 1.

Le dispositif électronique 2 comprend :
- un boitier 24 hébergeant des composants électroniques du dispositif électronique 2 ;
- une antenne 21 de télécommunication bidirectionnelle à courte distance ;
- une mémoire 22 ;
- une unité de traitement électronique 23 ;
- une batterie secondaire électrique 24 ;
- des moyens de télécommunication bidirectionnelle à longue distance 25.

Ce dispositif électronique 2 est couplé au moteur électrique 12. Ce couplage permet au dispositif électronique 2 de communiquer avec le moteur électrique 12. Par exemple, le dispositif électronique 2 peut collecter des informations techniques du moteur électrique 12 et envoyer des commandes au moteur électrique 12.

**Tel** que cela apparaît par la suite, le dispositif électronique 2 est paramétré pour entraîner une bascule du moteur électrique 12 entre son état opérationnel et son état hors service.

Les paramétrages du dispositif électronique 2 sont mis en œuvre par son unité de traitement électronique 23, et sa mémoire 22. Le dispositif électronique 2 est notamment couplé au moteur électrique 12 par l'intermédiaire d'une connectique filaire. Il est envisageable que le dispositif électronique 2 soit couplé au moteur électrique 12 par l'intermédiaire de moyens de connexion sans fils.

Le dispositif électronique 2 est également couplé à la batterie électrique 13. Ce couplage permet au dispositif électronique 2 d'être alimenté en électricité par la batterie électrique 13. La batterie secondaire électrique 24 est alors conçue pour pallier une perte d'alimentation électrique depuis cette batterie électrique 13, et pour se recharger dès le rétablissement d'une alimentation électrique depuis cette batterie électrique 13.

Selon le présent mode de réalisation, le couplage du dispositif électronique 2 à la batterie électrique 13 permet également l'établissement d'une communication entre ces deux éléments. Par exemple, le dispositif électronique 2 peut collecter des informations techniques de la batterie électrique 13 et envoyer des commandes à la batterie électrique 13.

**Tel** que cela est détaillé par la suite, le dispositif électronique 2 est paramétré pour :
- autoriser la bascule du moteur électrique 12 de son état hors service à son état opérationnel suite à un ou des événements prédéterminés ;
- entraîner une bascule du moteur électrique 12 de son état opérationnel à son état hors service suite à un ou des événements prédéterminés.

Selon des modes de réalisation envisageable, le basculement du moteur électrique 12 autorisé par le dispositif électronique 2 peut être accompagné de l'une ou d'une combinaison des actions suivantes :
- d'un déverrouillage d'un cadenas motorisé monté sur le véhicule à pédales ;
- de l'activation d'une interface de contrôle montée, par exemple, sur le guidon ;
- de la désactivation d'une alarme montée sur le véhicule à pédales.

Toujours en référence à la figure 1, le badge électronique 3 est décrit plus précisément ci-après.

Ce badge électronique 3 est portable. Par « portable », il est entendu que ce badge électronique 3 peut aisément être porté par une personne utilisatrice du véhicule à pédales. Par exemple, le badge électronique 3 peut présenter les dimensions d'un badge d'accès à une habitation, à un garage. Ce badge électronique 3 peut par exemple présenter des dimensions comparables à celles d'une carte de paiement à puce électronique ou encore d'une carte de visite. Le badge électronique 3 peut également être miniaturisé afin de limiter le plus possible son encombrement.

Ce badge électronique 3 comprend :
- une enveloppe 34 ;
- une antenne 31 de télécommunication bidirectionnelle à courte distance ;
- une unité électronique 32 ;
- un accumulateur électrique 33, rechargeable ou non-rechargeable.

L'antenne 31 de télécommunication bidirectionnelle à courte distance du badge électronique 3 est conçue, et apte, pour communiquer avec l'antenne 21 de télécommunication bidirectionnelle à courte distance du dispositif électronique 2.

Ce badge électronique 3 est paramétré pour émettre un message de présence par le biais de son antenne 31 de télécommunication bidirectionnelle à courte distance. Ce message de présence est conçu pour être capté par le dispositif électronique 2 lorsque le badge électronique 3 et le dispositif électronique 2 du véhicule à pédales 1 sont à portée l'un de l'autre.

De manière complémentaire, le dispositif électronique 2 est paramétré pour :
- rechercher périodiquement un message de présence du badge électronique 3 par le biais de son antenne 21 de télécommunication bidirectionnelle à courte distance ;
- établir une connexion avec le badge électronique 3 lors de la réception d'un message de présence du badge électronique 3.

À la suite d'une connexion entre le dispositif électronique 2 et le badge électronique 3, le dispositif électronique 2 présente deux autres paramétrages qui sont fonction de l'état hors service ou de l'état opérationnel dans lequel est initialement le moteur électrique 12. En effet, le dispositif électronique 2 est paramétré pour
- autoriser la bascule du moteur électrique 12 de son état hors service à son état opérationnel suite à l'établissement d'une connexion avec le badge électronique 3 ;
- entraîner une bascule du moteur électrique 12 de son état opérationnel à son état hors service suite à une perte de connexion avec le badge électronique 3.

En d'autres termes, quand le badge électronique 3 est amené à portée de connexion entre les antennes 21, 31 du dispositif électronique 2 et du badge électronique 3, alors le dispositif électronique 2 entraîne la bascule du moteur électrique 12 de son état hors service à son état opérationnel, et une déconnexion, par exemple faisant suite à l'éloignement du badge électronique 3 du dispositif électronique 2 entraîne la bascule du moteur électrique 12 de l'état opérationnel à l'état hors service.

Selon un mode de réalisation envisageable, le badge électronique 3 pourrait ne pas être muni d'un accumulateur électrique 33, et serait passif, en étant alimenté et activé par des ondes électro-magnétiques provenant de l'extérieur, c'est-à-dire du dispositif électronique 2, et captées par l'antenne 31 de télécommunication bidirectionnelle à courte distance.

Dans ce mode de réalisation envisageable, le badge électronique 3 est paramétré pour émettre un message de présence par le biais de son antenne 31 de télécommunication bidirectionnelle à courte distance en réponse à un message de recherche émis par le dispositif électronique 2. Un tel message de recherche est émis par le dispositif électronique 2 conformément à son paramétrage dans lequel il recherche périodiquement un message de présence du badge électronique 3

Cette configuration est notamment mise en oeuvre dans le cas où une technologie de type radio-identification, le plus souvent désignée par l'acronyme RFID. Dans cette configuration, le badge électronique 3 est assimilable à une radio- étiquette.

Selon le présent mode de réalisation, le badge électronique 3 est du type « actif » et l'accumulateur électrique 33 alimente l'unité électronique 32 sans nécessiter la réception d'ondes électro-magnétiques par l'antenne 31 de télécommunication bidirectionnelle à courte distance.

Dans ce mode de réalisation, le badge électronique 3 est alors paramétré pour émettre « périodiquement » un message de présence par le biais de son antenne 31 de télécommunication bidirectionnelle à courte distance. La périodicité est programmée dans l'unité électronique 32 du badge électronique 3, et peut par exemple être de l'ordre de 5 secondes.

Cette configuration est notamment mise en œuvre dans le cas où le badge électronique 3 et le dispositif électronique 2, et plus spécifiquement leurs antennes 31, 21, communiquent par le biais de la norme de télécommunications désignée par la marque déposée « Bluetooth », qui permet l'échange bidirectionnel de données à courte distance en utilisant des ondes radio UHF.

Selon le présent mode de réalisation, le badge électronique 3 intègre un identifiant. Cet identifiant est notamment programmé dans l'unité électronique 32.

Tel qu'évoqué précédemment, le dispositif électronique 2 comprend une mémoire 22. Cette mémoire 22 est alors programmée avec l'identifiant du badge électronique 3 afin de permettre son identification.

Selon un mode de réalisation envisageable, l'identifiant pourrait être générique et inscriptible dans l'unité électronique 32 d'une pluralité de badge électronique 2, la mémoire 22 du dispositif électronique 2 étant alors programmée avec l'identifiant générique des badges électronique 3 afin de permettre l'identification de chacun de ces badges.

Alternativement, l'identifiant est unique à un seul badge électronique 3.

Grâce à ce ou ces identifiants, le dispositif électronique 2 est paramétré pour établir un primo-appairage avec le badge électronique 3 lors de la réception d'un message de présence du badge électronique 3, et suite à la vérification de l'identifiant du badge électronique 3 avec celui programmé dans sa mémoire 22.

De cette manière, le dispositif électronique 2 ne peut être appairé, et ne peut se connecter qu'à un badge dont l'identifiant lui a été préalablement programmé dans sa mémoire 22.

Tel qu'évoqué précédemment, et selon le présent mode de réalisation, le système comprend également un ordiphone 4.

Cet ordiphone 4 comprend :
- une antenne 41 de télécommunication bidirectionnelle à courte distance ;
- des moyens de traitement électroniques 42 ;
- des moyens de télécommunication bidirectionnelle à longue distance 43 ;
- une interface 44, comprenant notamment un écran tactile.

L'interface 44 permet de saisir des informations dans l'ordiphone et de prendre connaissance de données s'affichant notamment sur l'écran tactile.

Les moyens de traitement électroniques 42 de l'ordiphone 4 sont couplés à l'antenne 41 de télécommunication bidirectionnelle à courte distance, aux moyens de télécommunication bidirectionnelle à longue distance 43, et à l'interface 44.

L'antenne 41 de télécommunication bidirectionnelle à courte distance de l'ordiphone est conçue, et apte, pour communiquer avec l'antenne 21 de télécommunication bidirectionnelle à courte distance du dispositif électronique 2.

Selon le présent mode de réalisation, l'ordiphone 4, grâce à ses moyens de télécommunication bidirectionnelle à longue distance 43, et le dispositif électronique 2, grâce à ses moyens de télécommunication bidirectionnelle à longue distance 25, sont aptes à échanger des données avec un serveur distant (non représenté). Ceci permet notamment à l'ordiphone d'être connecté et/ou d'échanger des données au dispositif électronique 2 alors qu'il n'est pas à proximité du véhicule à pédales 1 et que les antennes 21, 41 de télécommunication bidirectionnelle à courte distance ne sont pas suffisamment proches l'une de l'autre pour permettre d'établir une connexion.

L'ordiphone 4 est paramétré pour rechercher périodiquement un message de présence du dispositif électronique 2, et pour établir une connexion avec le dispositif électronique 2 lors de la réception d'un message de présence du dispositif électronique 2.

Dans ce mode de réalisation, le dispositif électronique 2 est paramétré pour également émettre périodiquement un message de présence par le biais de son antenne 21 de télécommunication bidirectionnelle à courte distance.

L'ordiphone 4 et le dispositif électronique 2, et plus spécifiquement leurs antennes 41, 21, communiquent par le biais de la norme de télécommunications désignée par la marque déposée « Bluetooth, qui permet l'échange bidirectionnel de données à courte distance en utilisant des ondes radio UHF.

Il peut être remarqué qu'à la différence de la connexion entre le dispositif électronique 2 et le badge électronique 3 issue de la recherche périodique par le dispositif électronique 2, il s'agit ici de l'ordiphone 4 qui réalise une recherche périodique du dispositif électronique 2 pour établir la connexion.

De manière similaire au paramétrage précédemment décrit pour le badge électronique 3, le dispositif électronique 2 est paramétré pour :
- autoriser la bascule du moteur électrique 12 de son état hors service à son état opérationnel suite à l'établissement d'une connexion avec l'ordiphone 4 ;
- entraîner une bascule du moteur électrique 12 de son état opérationnel à son état hors service suite à une perte de connexion avec l'ordiphone 4.

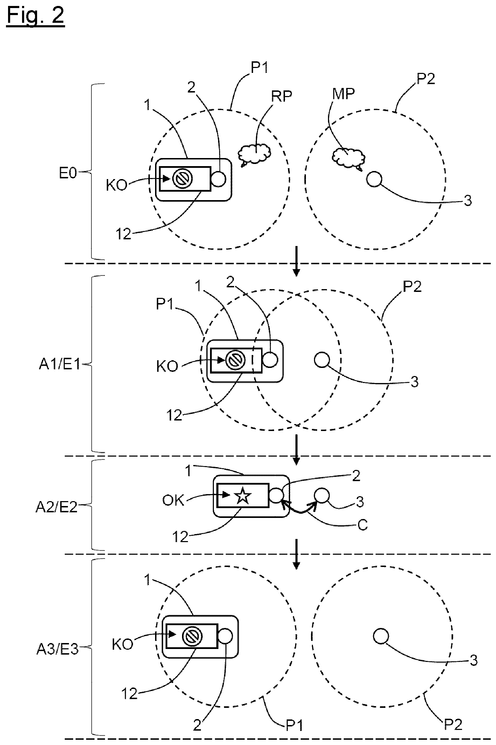

En référence à la figure 2, le procédé de contrôle d'une assistance électrique d'un véhicule à pédales 1, du système de contrôle précédemment décrit et représenté sur la figure 1, est à présent décrit.

Selon le présent mode de réalisation, le procédé comprend une étape préliminaire de primo-appairage du badge électronique 3 avec le dispositif électronique 2.

L'étape préliminaire de primo-appairage comprend :
- une sous-étape de renseignement au dispositif électronique 2 d'un identifiant du badge électronique 3 ;
- une sous-étape de positionnement du badge électronique 3 à une portée opérationnelle des antennes 21, 31 de télécommunication bidirectionnelle à courte distance du dispositif électronique 2 et du badge électronique 3 ;
- une sous-étape de primo-connexion du dispositif électronique 2 au badge électronique 3.

La sous-étape de positionnement est assimilable à la situation A1 illustrée sur la figure 2, dans laquelle le badge électronique 3 est située dans le périmètre P1 correspondant à la portée opérationnelle de l'antenne 21 de télécommunication bidirectionnelle à courte distance du dispositif électronique 2, et dans laquelle le dispositif électronique 2 est situé dans le périmètre P2 correspondant à la portée opérationnelle de l'antenne 31 de télécommunication bidirectionnelle à courte distance du badge électronique 3.

Suite à ces sous-étapes, le badge électronique 3 est connecté pour la première fois au dispositif électronique 2 du véhicule à pédales 1.

Cet état est illustré par la situation A2 sur la figure 2, où une connexion bidirectionnelle C est établie entre le badge électronique 3 et le dispositif électronique 2.

L'étape préliminaire de primo-appairage peut être réalisée à l'aide de l'ordiphone 4, utilisé comme intermédiaire pour charger des informations, dont l'identifiant du badge électronique 3, jusqu'au dispositif électronique 2.

Dans la situation A2, la connexion bidirectionnelle C a entraîné une étape de déverrouillage, dans laquelle le dispositif électronique 2 autorise la bascule du moteur électrique 12 de son état hors service KO à son état opérationnel OK.

Lorsqu'il n'est plus connecté au badge électronique 3, tel que cela est illustré par la situation A3 faisant suite à la situation A2, une étape de verrouillage est entraînée, dans laquelle le dispositif électronique 2 entraîne une bascule du moteur électrique 12 de son état opérationnel OK à son état hors service KO.

Suite à l'étape préliminaire de primo-appairage, le dispositif électronique 2 et le badge électronique 3 gardent une mémoire de ce primo-appairage.

La situation E0 peut alors être observée, le moteur électrique 12 étant dans un état hors service KO.

Dans cette situation E0, le procédé met en œuvre une étape d'annonce du badge électronique 3. Lors de cette étape d'annonce, le badge électronique 3 émet un message de présence MP par le biais de son antenne 31 de télécommunication bidirectionnelle à courte distance.

Selon le présent mode de réalisation, et tel qu'évoqué précédemment, le badge électronique 3 est du type « actif » et émet périodiquement son message de présence MP.

En d'autres termes, le badge électronique 3 annonce sa présence périodiquement.

Cette étape d'annonce se poursuit tant que le badge électronique 3 n'est pas connecté au dispositif électronique 2.

Dans la situation E0, le procédé met également en œuvre une étape de recherche par le dispositif électronique 2, dans laquelle le dispositif électronique 2 recherche périodiquement (recherche illustrée par la référence RP) un message de présence du badge électronique 3 par le biais de son antenne 21 de télécommunication bidirectionnelle à courte distance.

Dans la situation E1, le badge électronique 3 est située dans le périmètre P1 correspondant à la portée opérationnelle de l'antenne 21 de télécommunication bidirectionnelle à courte distance du dispositif électronique 2, et le dispositif électronique 2 est situé dans le périmètre P2 correspondant à la portée opérationnelle de l'antenne 31 de télécommunication bidirectionnelle à courte distance du badge électronique 3.

Le procédé met alors en œuvre une étape de connexion entre le badge électronique 3 et le dispositif électronique 2 lors de la réception d'un message de présence MP du badge électronique 3 par le dispositif électronique 2.

À la suite de l'établissement d'une connexion du dispositif électronique 2 avec le badge électronique 3, le procédé met en œuvre une étape de déverrouillage. Dans cette étape de déverrouillage, le dispositif électronique 2 autorise la bascule du moteur électrique 12 de son état hors service KO à son état opérationnel OK. Le véhicule à pédales 1 dispose alors d'une assistance électrique au pédalage opérationnelle.

La situation E2 peut alors être observée. Une connexion bidirectionnelle C est active entre le badge électronique 3 et le dispositif électronique 2, et le moteur électrique est dans son état opérationnel OK.

Si une perte de connexion venait à se produire entre le dispositif électronique 2 et le badge électronique 3, la situation E3 serait alors observée.

Dans cette situation, le procédé met en œuvre une étape de verrouillage. Dans cette étape de verrouillage, le dispositif électronique 2 entraîne une bascule du moteur électrique 12 de son état opérationnel OK à son état hors service KO. Le véhicule à pédales 1 ne dispose plus d'une assistance électrique au pédalage opérationnelle.

Le procédé remet alors en œuvre l'étape d'annonce du badge électronique 3 et l'étape de recherche par le dispositif électronique 2. La situation E0 peut de nouveau être identifiée.

Selon le présent mode de réalisation, et tel qu'évoqué précédemment, le système met en œuvre un ordiphone 4. Le procédé met alors en œuvre les étapes décrites ci-après.

Dans la situation E0, le procédé met également en œuvre :
- une étape d'annonce par le dispositif électronique 2 ;
- une étape de recherche par l'ordiphone 4.

Dans l'étape d'annonce par le dispositif électronique 2, le dispositif électronique 2 émet périodiquement un message de présence par le biais de son antenne 21 de télécommunication bidirectionnelle à courte distance. A contrario du fonctionnement avec le badge électronique 3, il s'agit bien ici du dispositif électronique 2 qui annonce sa présence.

Dans l'étape de recherche par l'ordiphone 4, l'ordiphone 4 recherche périodiquement ce message de présence du dispositif électronique 2.

Dans cette configuration, l'étape de déverrouillage est également entraînée par l'établissement de la connexion du dispositif électronique 2 avec l'ordiphone 4, et l'étape de verrouillage est également entraînée par une perte de connexion du dispositif électronique 2 avec l'ordiphone 4.

L'un ou l'autre du badge électronique 3 et de l'ordiphone 4 peut alors être utilisé pour activer ou désactiver l'assistance électrique au pédalage. Ainsi, le procédé est conçu de manière que l'étape de verrouillage n'est pas entraînée tant que l'un du badge électronique 3 et de l'ordiphone 4 est toujours connecté avec le dispositif électronique 2.

Les paramétrages précédemment décrits (perte de connexion du dispositif électronique 2 avec le badge électronique 3 ou avec l'ordiphone 4) entraînant la bascule du moteur électrique 12 de son état opérationnel à son état hors service, peuvent également être associés avec d'autres événements prédéterminés.

Ces autres événements prédéterminés peuvent consister en la vérification de conditions de sécurité telles que l'arrêt du véhicule à pédales 1 (le véhicule n'avance plus), et/ou l'absence de mouvement du véhicule à pédales 1 (le véhicule n'est pas manipulé).

Le système de contrôle d'une assistance électrique d'un véhicule à pédales électrique, et le procédé mis en œuvre facilitent le contrôle du véhicule à pédales par un utilisateur, et ce notamment par rapport aux systèmes de contrôle selon l'art antérieur impliquant obligatoirement une connexion à un serveur distant.

## Revendications

1. Système de contrôle d'une assistance électrique d'un véhicule à pédales (1) comprenant :
- un véhicule à pédales (1) comprenant un pédalier (11) et un moteur électrique (12) d'assistance électrique associé au pédalier (11), le moteur électrique (12) présentant un état opérationnel dans lequel il est susceptible de produire une assistance électrique au pédalage, et un état hors service dans lequel l'assistance électrique au pédalage est inactive ;
- un dispositif électronique (2) monté sur le véhicule à pédales (1) et couplé au moteur électrique (12), le dispositif électronique (2) étant paramétré pour entraîner une bascule du moteur électrique (12) entre son état opérationnel et son état hors service, le dispositif électronique (2) comprenant une antenne (21) de télécommunication bidirectionnelle à courte distance ;
- -un badge électronique (3) portable comprenant une antenne (31) de télécommunication bidirectionnelle à courte distance apte à communiquer avec l'antenne (21) de télécommunication bidirectionnelle à courte distance du dispositif électronique (2), le badge électronique (3) étant paramétré pour émettre un message de présence par le biais de son antenne (31) de télécommunication bidirectionnelle à courte distance, le dispositif électronique (2) est paramétré pour :
- rechercher périodiquement un message de présence du badge électronique (3) par le biais de son antenne (21) de télécommunication bidirectionnelle à courte distance ;
- établir une connexion avec le badge électronique (3) lors de la réception d'un message de présence du badge électronique (3) ;
- autoriser la bascule du moteur électrique (12) de son état hors service à son état opérationnel suite à l'établissement d'une connexion avec le badge électronique (3) ;
- entraîner une bascule du moteur électrique (12) de son état opérationnel à son état hors service suite à une perte de connexion avec le badge électronique (3) ; le badge électronique (3) est paramétré pour émettre périodiquement le message de présence par le biais de son antenne (31) de télécommunication bidirectionnelle à courte distance,
**caractérisé en ce qu'**il comprend un ordiphone (4) comprenant une antenne (41) de télécommunication bidirectionnelle à courte distance apte à communiquer avec l'antenne (21) de télécommunication bidirectionnelle à courte distance du dispositif électronique (2), le dispositif électronique (2) étant paramétré pour également émettre périodiquement un message de présence par le biais de son antenne (21) de télécommunication bidirectionnelle à courte distance,
l'ordiphone (4) étant paramétré pour rechercher périodiquement un message de présence du dispositif électronique (2), et pour établir une connexion avec le dispositif électronique (2) lors de la réception d'un message de présence du dispositif électronique (2),
et **en ce que** le dispositif électronique (2) est paramétré pour :
- autoriser la bascule du moteur électrique (12) de son état hors service à son état opérationnel suite à l'établissement d'une connexion avec l'ordiphone (4) ;
- entraîner une bascule du moteur électrique (12) de son état opérationnel à son état hors service suite à une perte de connexion avec l'ordiphone (4).

2. Système selon la revendication précédente, **caractérisé en ce que** le badge électronique (3) intègre un identifiant,
et **en ce que** le dispositif électronique (2) comprend une mémoire (22) programmée avec l'identifiant du badge électronique (3), le dispositif électronique (2) étant paramétré pour établir un primo-appairage avec le badge électronique (3) lors de la réception d'un message de présence du badge électronique (3), et suite à la vérification de l'identifiant du badge électronique (3) avec celui programmé dans sa mémoire (22).

3. Procédé de contrôle d'une assistance électrique d'un véhicule à pédales (1), le procédé mettant en oeuvre un système de contrôle d'une assistance électrique d'un véhicule à pédales (1) comprenant :
- un véhicule à pédales (1) comprenant un pédalier (11) et un moteur électrique (12) d'assistance électrique associé au pédalier (11), le moteur électrique (12) présentant un état opérationnel dans lequel il est susceptible de produire une assistance électrique au pédalage, et un état hors service dans lequel l'assistance électrique au pédalage est inactive ;
- un dispositif électronique (2) solidarisé au véhicule à pédales (1), le dispositif étant couplé au moteur électrique (12) et paramétré pour entraîner une bascule du moteur électrique (12) entre son état opérationnel et son état hors service, le dispositif électronique (2) comprenant une antenne (21) de télécommunication bidirectionnelle à courte distance ; le système comprend également un badge électronique (3) portable comprenant une antenne (31) de télécommunication bidirectionnelle à courte distance apte à communiquer avec l'antenne (21) de télécommunication bidirectionnelle à courte distance du dispositif électronique (2),
le procédé comprenant :
- une étape de recherche par le dispositif électronique (2), dans laquelle le dispositif électronique (2) recherche périodiquement un message de présence du badge électronique (3) par le biais de son antenne (21) de télécommunication bidirectionnelle à courte distance ;
- une étape d'annonce du badge électronique (3), dans laquelle le badge électronique (3) émet un message de présence par le biais de son antenne (31) de télécommunication bidirectionnelle à courte distance ;
- une étape de connexion entre le badge électronique (3) et le dispositif électronique (2) lors de la réception d'un message de présence du badge électronique (3) par le dispositif électronique (2) ;
- une étape de déverrouillage, dans laquelle le dispositif électronique (2) autorise la bascule du moteur électrique (12) de son état hors service à son état opérationnel, entraînée par l'établissement d'une connexion du dispositif électronique (2) avec le badge électronique (3);
- une étape de verrouillage, dans laquelle le dispositif électronique (2) entraîne une bascule du moteur électrique (12) de son état opérationnel à son état hors service, l'étape de verrouillage étant entraînée par une perte de connexion du dispositif électronique (2) avec le badge électronique (3), lors de l'étape d'annonce du badge électronique (3), le badge électronique (3) émet périodiquement son message de présence, et le système met également en oeuvre un ordiphone (4) comprenant une antenne (41) de télécommunication bidirectionnelle à courte distance apte à communiquer avec l'antenne (21) de télécommunication bidirectionnelle à courte distance du dispositif électronique (2),
le procédé comprenant :
- une étape d'annonce par le dispositif électronique (2), dans laquelle le dispositif électronique (2) émet périodiquement un message de présence par le biais de son antenne (21) de télécommunication bidirectionnelle à courte distance ;
- une étape de recherche par l'ordiphone (4), dans laquelle l'ordiphone (4) recherche périodiquement un message de présence du dispositif électronique (2) ; et :
- l'étape de déverrouillage est également entraînée par l'établissement de la connexion du dispositif électronique (2) avec l'ordiphone (4) ;
- l'étape de verrouillage est également entraînée par une perte de connexion du dispositif électronique (2) avec l'ordiphone (4).

4. Procédé selon la revendication précédente, **caractérisé en ce que** l'étape de verrouillage n'est pas entraînée tant que l'un du badge électronique (3) et de l'ordiphone (4) est toujours connecté avec le dispositif électronique (2).

5. Procédé selon l'une quelconque des revendications 3 à 4, **caractérisé en ce qu'**il comprend une étape préliminaire de primo-appairage du badge électronique (3) avec le dispositif électronique (2), l'étape préliminaire de primo-appairage comprenant :
- une sous-étape de renseignement au dispositif électronique (2) d'un identifiant du badge électronique (3) ;
- une sous-étape de positionnement du badge électronique (3) à une portée opérationnelle des antennes (21, 31) de télécommunication bidirectionnelle à courte distance du dispositif électronique (2) et du badge électronique (3) ;
- une sous-étape de primo-connexion du dispositif électronique (2) au badge électronique (3) ;
et dans lequel, suite à l'étape préliminaire de primo-appairage le dispositif électronique (2) et le badge électronique (3) gardent une mémoire de ce primo-appairage, et le dispositif électronique (2) réalise l'étape de recherche lors qu'il n'est plus connecté au badge électronique (3).

## Patentansprüche

1. Steuerungssystem für eine elektrische Unterstützung eines Pedalfahrzeugs (1), umfassend:
- ein Pedalfahrzeug (1), das eine Pedalanlage (11) und einen mit der Pedalanlage (11) verbundenen Elektromotor (12) zur elektrischen Unterstützung umfasst, wobei der Elektromotor (12) einen Betriebszustand, in dem er eine elektrische Unterstützung bei dem Treten erzeugen kann, und einen Ruhezustand aufweist, in dem die elektrische Unterstützung bei dem Treten inaktiv ist;
- eine elektronische Vorrichtung (2), die an dem Pedalfahrzeug (1) montiert und mit dem Elektromotor (12) gekoppelt ist, wobei die elektronische Vorrichtung (2) so eingestellt ist, dass sie ein Umschalten des Elektromotors (12) zwischen seinem Betriebszustand und seinem Ruhezustand bewirkt, wobei die elektronische Vorrichtung (2) eine Antenne (21) für bidirektionale Nahbereichs-Telekommunikation umfasst;
- einen tragbaren elektronischen Ausweis (3), der eine Antenne (31) für die bidirektionale Nahbereichs-Telekommunikation umfasst, die mit der Antenne (21) für die bidirektionale Nahbereichs-Telekommunikation in der elektronischen Vorrichtung (2) kommunizieren kann, wobei der elektronische Ausweis (3) so eingestellt ist, dass er über seine Antenne (31) für die bidirektionale Nahbereichs-Telekommunikation eine Anwesenheitsmeldung sendet,
wobei die elektronische Vorrichtung (2) für Folgendes eingestellt ist:
- periodisches Suchen nach einer Anwesenheitsmeldung des elektronischen Ausweises (3) über seine Antenne (21) für bidirektionale Nahbereichs-Telekommunikation;
- Herstellen einer Verbindung mit dem elektronischen Ausweis (3) bei dem Empfang einer Anwesenheitsmeldung des elektronischen Ausweises (3);
- Gestatten des Wechsels des Elektromotors (12) von seinem Ruhezustand in seinen Betriebszustand nach dem Herstellen einer Verbindung mit dem elektronischen Ausweis (3);
- Bewirken eines Wechsels des Elektromotors (12) von seinem Betriebszustand in seinen Ruhezustand infolge eines Verbindungsverlusts mit dem elektronischen Ausweis (3); wobei der elektronische Ausweis (3) so eingestellt ist, dass er periodisch die Anwesenheitsmeldung über seine Antenne (31) für bidirektionale Nahbereichs-Telekommunikation sendet,
**dadurch gekennzeichnet, dass** es ein Smartphone (4) umfasst, das eine Antenne (41) für bidirektionale Nahbereichs-Telekommunikation umfasst, die in der Lage ist, mit der Antenne (21) für bidirektionale Nahbereichs-Telekommunikation der elektronischen Vorrichtung (2) zu kommunizieren, wobei die elektronische Vorrichtung (2) so eingestellt ist, dass sie auch periodisch eine Anwesenheitsmeldung über ihre Antenne (21) für bidirektionale Nahbereichs-Telekommunikation sendet, wobei das Smartphone (4) so eingestellt ist, dass es periodisch nach einer Anwesenheitsmeldung der elektronischen Vorrichtung (2) sucht und beim Empfang einer Anwesenheitsmeldung der elektronischen Vorrichtung (2) eine Verbindung mit der elektronischen Vorrichtung (2) herstellt,
und dass die elektronische Vorrichtung (2) für Folgendes eingestellt ist:
- Gestatten des Wechsels des Elektromotors (12) von seinem Ruhezustand in seinen Betriebszustand nach dem Herstellen einer Verbindung mit dem Smartphone (4);
- Bewirken eines Wechsels des Elektromotors (12) von seinem Betriebszustand in seinen Ruhezustand infolge eines Verbindungsverlusts mit dem Smartphone (4).

2. System nach dem vorhergehenden Anspruch, **dadurch gekennzeichnet, dass** eine Kennung in den elektronischen Ausweis (3) integriert ist,
und dass die elektronische Vorrichtung (2) einen Speicher (22) umfasst, der mit der Kennung des elektronischen Ausweises (3) programmiert ist, wobei die elektronische Vorrichtung (2) so eingestellt ist, dass sie bei dem Empfang einer Anwesenheitsmeldung des elektronischen Ausweises (3) und nach der Überprüfung der Kennung des elektronischen Ausweises (3) mit der in seinem Speicher (22) programmierten Kennung eine Erstkopplung mit dem elektronischen Ausweis (3) herstellt.

3. Verfahren zur Steuerung einer elektrischen Unterstützung eines Pedalfahrzeugs (1), wobei das Verfahren ein System zur Steuerung einer elektrischen Unterstützung eines Pedalfahrzeugs (1) implementiert, umfassend:
- ein Pedalfahrzeug (1), das eine Pedalanlage (11) und einen mit der Pedalanlage (11) verbundenen Elektromotor (12) zur elektrischen Unterstützung umfasst, wobei der Elektromotor (12) einen Betriebszustand, in dem er eine elektrische Unterstützung bei dem Treten erzeugen kann, und einen Ruhezustand aufweist, in dem die elektrische Unterstützung bei dem Treten inaktiv ist;
- eine elektronische Vorrichtung (2), die mit dem Pedalfahrzeug (1) fest verbunden ist, wobei die Vorrichtung mit dem Elektromotor (12) gekoppelt und so parametriert ist, dass sie einen Wechsel des Elektromotors (12) zwischen seinem Betriebszustand und seinem Ruhezustand bewirkt, wobei die elektronische Vorrichtung (2) eine Antenne (21) für bidirektionale Nahbereichs-Telekommunikation umfasst;
wobei das System auch einen tragbaren elektronischen Ausweis (3) umfasst, der eine Antenne (31) für die bidirektionale Nahbereichs-Telekommunikation umfasst, die mit der Antenne (21) für die bidirektionale Nahbereichs-Telekommunikation der elektronischen Vorrichtung (2) kommunizieren kann,
wobei das Verfahren umfasst:
- einen Suchschritt durch die elektronische Vorrichtung (2), wobei die elektronische Vorrichtung (2) periodisch eine Anwesenheitsmeldung des elektronischen Ausweises (3) über ihre Antenne (21) für die bidirektionale Nahbereichs-Telekommunikation sucht;
- einen Schritt der Ankündigung des elektronischen Ausweises (3), wobei der elektronische Ausweis (3) über seine Antenne (31) für die bidirektionale Nahbereichs-Telekommunikation eine Anwesenheitsmeldung sendet;
- einen Verbindungsschritt zwischen dem elektronischen Ausweis (3) und der elektronischen Vorrichtung (2) bei dem Empfang einer Anwesenheitsmeldung des elektronischen Ausweises (3) durch die elektronische Vorrichtung (2);
- einen Entsperrungsschritt, wobei die elektronische Vorrichtung (2) den Wechsel des Elektromotors (12) von seinem Ruhezustand in seinen Betriebszustand gestattet, bewirkt durch das Herstellen einer Verbindung der elektronischen Vorrichtung (2) mit dem elektronischen Ausweis (3);
- einen Sperrschritt, wobei die elektronische Vorrichtung (2) einen Wechsel des Elektromotors (12) von seinem Betriebszustand in seinen Ruhezustand bewirkt, wobei der Verriegelungsschritt durch einen Verbindungsverlust der elektronischen Vorrichtung (2) mit dem elektronischen Ausweis (3) bewirkt wird,
wobei während des Ankündigungsschritts des elektronischen Ausweises (3) der elektronische Ausweis (3) periodisch seine Anwesenheitsmeldung sendet,
und das System auch ein Smartphone (4) implementiert, das eine Antenne (41) für die bidirektionale Nahbereichs-Telekommunikation umfasst, die in der Lage ist, mit der Antenne (21) für die bidirektionale Nahbereichs-Telekommunikation der elektronischen Vorrichtung (2) zu kommunizieren,
wobei das Verfahren umfasst:
- einen Ankündigungsschritt durch die elektronische Vorrichtung (2), wobei die elektronische Vorrichtung (2) periodisch eine Anwesenheitsmeldung über ihre Antenne (21) für bidirektionale Nahbereichs-Telekommunikation sendet;
- einen Suchschritt durch das Smartphone (4), wobei das Smartphone (4) periodisch nach einer Anwesenheitsmeldung der elektronischen Vorrichtung (2) sucht;
und:
- der Entsperrungsschritt wird auch durch das Herstellen der Verbindung der elektronischen Vorrichtung (2) mit dem Smartphone (4) bewirkt;
- der Sperrschritt wird auch durch einen Verbindungsverlust der elektronischen Vorrichtung (2) mit dem Smartphone (4) bewirkt.

4. Verfahren nach dem vorhergehenden Anspruch, **dadurch gekennzeichnet, dass** der Sperrschritt nicht bewirkt wird, solange eines von dem elektronischen Ausweis (3) und dem Smartphone (4) immer mit der elektronischen Vorrichtung (2) verbunden ist.

5. Verfahren nach einem der Ansprüche 3 bis 4, **dadurch gekennzeichnet, dass** es einen einleitenden Vorschritt der Erstkopplung des elektronischen Ausweises (3) mit der elektronischen Vorrichtung (2) umfasst, wobei der einleitende Vorschritt der Erstkopplung umfasst:
- einen Unterschritt der Übermittlung einer Kennung des elektronischen Ausweises (3) an die elektronische Vorrichtung (2);
- einen Unterschritt des Positionierens des elektronischen Ausweises (3) in einer Betriebsreichweite der Antennen (21, 31) für die bidirektionale Nahbereichs-Telekommunikation der elektronischen Vorrichtung (2) und des elektronischen Ausweises (3);
- einen Unterschritt der erstmaligen Verbindung der elektronischen Vorrichtung (2) mit dem elektronischen Ausweis (3);
und wobei die elektronische Vorrichtung (2) und der elektronische Ausweis (3) nach dem einleitenden Schritt der erstmaligen Kopplung eine Information dieser erstmaligen Kopplung speichern, und die elektronische Vorrichtung (2) den Suchschritt durchführt, wenn sie nicht mehr mit dem elektronischen Ausweis (3) verbunden ist.

## Claims

1. Control system for an electrical assistance of a pedal vehicle (1), comprising:
- a pedal vehicle (1) comprising a pedal assembly (11) and an electric motor (12) for electrical assistance associated with the pedal assembly (11), the electric motor (12) having an operational state in which it is capable of producing electrical assistance for pedalling and an off state in which the electrical assistance for pedalling is inactive;
- an electronic device (2) mounted on the pedal vehicle (1) and coupled to the electric motor (12), the electronic device (2) being configured to induce the electric motor (12) to switch between its operational state and its off state, the electronic device (2) comprising a short-range bidirectional telecommunication antenna (21);
- a portable electronic badge (3) comprising a short-range bidirectional telecommunication antenna (31) capable of communicating with the short-range bidirectional telecommunication antenna (21) of the electronic device (2), the electronic badge (3) being configured to transmit a presence message via its short-range bidirectional telecommunication antenna (31),
the electronic device (2) is configured to:
- periodically search for a presence message of the electronic badge (3) via its short-range bidirectional telecommunication antenna (21);
- establish a connection with the electronic badge (3) upon reception of a presence message of the electronic badge (3);
- authorise switching of the electric motor (12) from its off state to its operational state following the establishment of a connection with the electronic badge (3);
- induce the electric motor (12) to switch from its operational state to its off state following a loss of connection with the electronic badge (3);
the electronic badge (3) is configured to periodically transmit the presence message via its short-range bidirectional telecommunication antenna (31), **characterised in that** it comprises a smartphone (4) comprising a short-range bidirectional telecommunication antenna (41) capable of communicating with the short-range bidirectional telecommunication antenna (21) of the electronic device (2), the electronic device (2) being configured also to periodically transmit a presence message via its short-range bidirectional telecommunication antenna (21),
the smartphone (4) being configured to periodically search for a presence message of the electronic device (2) and to establish a connection with the electronic device (2) upon reception of a presence message of the electronic device (2),
and **in that** the electronic device (2) is configured to:
- authorise switching of the electric motor (12) from its off state into its operational state following the establishment of a connection with the smartphone (4);
- make the electric motor (12) switch from its operational state into its off state following a loss of connection with the smartphone (4).

2. System according to the preceding claim, **characterised in that** the electronic badge (3) has an integrated identifier,
and **in that** the electronic device (2) comprises a memory (22) programmed with the identifier of the electronic badge (3), the electronic device (2) being configured to establish initial pairing with the electronic badge (3) upon reception of a presence message of the electronic badge (3) and following verification of the identifier of the electronic badge (3) with the identifier programmed in its memory (22).

3. Method for controlling an electrical assistance of a pedal vehicle (1), the method employing a system for controlling an electrical assistance of a pedal vehicle (1) comprising:
- a pedal vehicle (1) comprising a pedal assembly (11) and an electric motor (12) for electrical assistance associated with the pedal assembly (11), the electric motor (12) having an operational state in which it is capable of producing electrical assistance for pedalling and an off state in which the electrical assistance for pedalling is inactive;
- an electronic device (2) secured to the pedal vehicle (1), the device being coupled to the electric motor (12) and configured to induce the electric motor (12) to switch between its operational state and its off state, the electronic device (2) comprising a short-range bidirectional telecommunication antenna (21);
the system also comprises a portable electronic badge (3) comprising a short-range bidirectional telecommunication antenna (31) capable of communicating with the short-range bidirectional telecommunication antenna (21) of the electronic device (2),
the method comprising:
- a step of searching by the electronic device (2), in which the electronic device (2) periodically searches for a presence message of the electronic badge (3) via its short-range bidirectional telecommunication antenna (21);
- an electronic badge (3) announcement step, in which the electronic badge (3) transmits a presence message via its short-range bidirectional telecommunication antenna (31);
- a step of connection between the electronic badge (3) and the electronic device (2) upon reception of a presence message of the electronic badge (3) by the electronic device (2);
- an unlocking step, in which the electronic device (2) authorises switching of the electric motor (12) from its off state to its operational state, induced by the establishment of a connection of the electronic device (2) with the electronic badge (3);
- a locking step, in which the electronic device (2) induces the electric motor (12) to switch from its operational state to its off state, the locking step being induced by a loss of connection of the electronic device (2) with the electronic badge (3),
the electronic badge (3) periodically transmits its presence message during the electronic badge (3) announcement step,
and the system also implements a smartphone (4) comprising a short-range bidirectional telecommunication antenna (41) capable of communicating with the short-range bidirectional telecommunication antenna (21) of the electronic device (2),
the method comprising:
- a step of announcement by the electronic device (2), in which the electronic device (2) periodically transmits a presence message via its short-range bidirectional telecommunication antenna (21);
- a step of searching by the smartphone (4), in which the smartphone (4) periodically searches for a presence message of the electronic device (2);
and:
- the unlocking step is also induced by the establishment of the connection of the electronic device (2) with the smartphone (4);
- the locking step is also induced by a loss of connection of the electronic device (2) with the smartphone (4).

4. Method according to the preceding claim, **characterised in that** the locking step is not induced so long as either the electronic badge (3) or the smartphone (4) is still connected with the electronic device (2).

5. Method according to any one of claims 3 to 4, **characterised in that** it comprises a preliminary step of initially pairing the electronic badge (3) with the electronic device (2), the preliminary step of initial pairing comprising:
- a substep of informing the electronic device (2) of an identifier of the electronic badge (3);
- a substep of positioning the electronic badge (3) within an operational range of the short-range bidirectional telecommunication antennas (21, 31) of the electronic device (2) and of the electronic badge (3);
- a substep of initially connecting the electronic device (2) to the electronic badge (3);
and in which, following the preliminary step of initial pairing, the electronic device (2) and the electronic badge (3) retain a memory of this initial pairing and the electronic device (2) carries out the search step when it is no longer connected to the electronic badge (3).
